# EUROPEAN PATENT APPLICATION

(11) **EP 3 015 429 A1**
(43) Date of publication of application: **04.05.2016**
(21) Application number: 14191102.4
(22) Date of filing: 30.10.2014
(51) Int. Cl.: C01D 15/02, C01F 5/14, C01F 7/00, C01G 53/00, C01B 13/36

(54) **Monolayer from at least one layered double hydroxide (LDH)**

(71) Applicant: Wintershall Holding GmbH, 34119 Kassel (DE)
(72) Inventor: Parvulescu, Andrei-Nicolae, 67152 Ruppertsberg (DE); Kimura, Riichiro, Jersey City, NJ 07310 (US); Zoellner, Bettina, 67152 Ruppertsberg (DE); Holtze, Christian, 68199 Mannheim (DE); Weisse, Sebastian Alexander, 68519 Viernheim (DE); Siggel, Lorenz, 69121 Heidelberg (DE); Mueller, Ulrich, 67435 Neustadt (DE)
(74) Representative: Maiwald Patentanwalts GmbH

(57) **Abstract**

The present invention relates to a process for the preparation of a monolayer of at least one layered double hydroxide (LDH) comprising the steps (A) to (H) as described herein. The present invention also relates to the use of a monolayer of at least one LDH in enhanced oil recovery.

## Description

The present invention relates to a process for preparing a monolayer of at least one layered double hydroxide (LDH). The present invention also relates to the use of a monolayer from the at least one LDH in enhanced oil recovery as well as a process for recovering oil from a reservoir using a monolayer of at least one LDH.

### Background of the invention

"Layered double hydroxides", also called LDHs, are clays consisting of stacks of positively charged mixed metal hydroxide layers with interlayer anions, mostly inorganic anions, to maintain overall charge neutrality. For many applications single layers of LDH are required, thus an elaborate exfoliation of the stacks into individual platelets is necessary. One possible exfoliation method is the exchange of the inorganic anions by organic anions, e. g. surfactants, which makes the LDH compatible with an organic solvent. Thus, an organically modified monolayer of LDH is generated.

With conventional synthesis routes the generation of LDH requires several steps and results in a structure of multi-layers. Common production methods for LDHs are precipitation processes. Another synthesis route is the urea hydrolysis method. Some special systems are produced via electrochemical synthesis or oxidation methods. All of these methods require a subsequent mechanical or chemical exfoliation step that is technically challenging. That makes the processes costly and limits the achievable aspect ratio.

For the preparation of LDHs the following prior art has to be considered:
WO 2011/124931 A1 discloses a layered double hydroxide compound for use in modulating an immune response to an antigen, and an immune modulator composition comprising the layered double hydroxide and an antigen.
WO 02/47729 A2 discloses a drug delivery system for the controlled release of a pharmaceutically-active compound by an oral route. The drug delivery system comprises an intercalate of a layered double hydroxide having, before intercalation, layers of metal hydroxides, and having intercalated therein a pharmaceutically-active compound having at least one anionic group.
WO 02/12255 A1 discloses a method of separating nucleoside phosphates by which a nucleoside phosphate can be separated from a mixture containing said nucleoside phosphates and, particularly, from a mixture containing said nucleoside phosphates and one or more other nucleoside phosphates using a layered double hydroxide.
WO 2012/150460 A1 discloses a method for the preparation of a layered double hydroxide comprising particles having a rod-like morphology. The method comprises preparing a precursor comprising particles of aluminum hydroxide having rod-like morphology, and contacting the precursor with an aqueous lithium salt.
WO 2012/150439 A1 discloses a method for the preparation of layered double hydroxides (LDHs) by providing a metal-containing solution containing either monovalent or divalent and trivalent metal cations and mixing with an amine or quaternary ammonium surfactant at a pre-determined ratio and hydrothermally treating the reaction mixture at a pre-determined temperature for a pre-determined period. Preferably, the method enables the particle size, particle size distribution and/or morphology of the LDHs to be controlled. Also disclosed are LDHs having a controlled particle size in the range 30-100 nm and composites comprising such LDHs.
WO 99/24139 discloses a process for separating a compound from a mixture of different compounds comprising at least two negatively charged groups connected by a linker group. The process comprises treating the mixture with a material comprising layers containing at least two different types of cation disposed in an ordered arrangement within each layer, such as layers of formula LiAl₂(OH)₆⁺, in order to separate the compound from the mixture by selective intercalation of the compound into the material.
Gang Hu et al. (Chem. Commun., 2006, pages 287 - 289) disclose hydrophobic layered double hydroxide particles with a single layer structure synthesized in a reverse microemulsion system.
US 6,988,550 discloses a method to prepare an oil-in-water emulsion in a subterranean formation in the presence of hydrophilic particles such as bentonite clay and kaolinite clay both of which comprise negatively charged layers and cations in the interlayer spaces.

In natural mineral oil deposits, mineral oil is present in the cavities of porous reservoir rocks which are closed off from the earth's surface by impermeable covering layers. The cavities may be very fine cavities, capillaries, pores or the like. Fine pore necks can have, for example, a diameter of only about 1 µm. In addition to mineral oil, including natural gas fractions, the deposits comprise water having a higher or lower salt content.

In mineral oil production, a distinction is made between primary, secondary and tertiary production.

In primary production, after sinking of the well into the deposit, the mineral oil flows by itself through the well to the surface owing to the autogenous pressure of the deposit. However, in general only from about 5 to 10% of the amount of mineral oil present in the deposit, depending on the type of deposit, can be extracted by means of primary production, after which the autogenous pressure is no longer sufficient for extraction.

Secondary production is therefore used after the primary production. In secondary production, further wells are drilled into the mineral oil-carrying formation, in addition to the wells which serve for production of the mineral oil, the so-called production wells. Water and/or steam is forced into the deposit through these so-called injection wells in order to maintain or to increase again the pressure. By forcing in the water, the mineral oil is forced slowly through the cavities in the formation, starting from the injection well, in the direction of the production well. However, this functions only as long as the cavities are completely filled with oil and the water pushes the more viscous oil in front of it. As soon as the low-viscosity water penetrates through cavities, it flows from this time on along the path of least resistance, i.e. through the resulting channel between the injection wells and the production wells, and no longer pushes the oil in front of it. As a rule, only from about 30 to 35% of the amount of mineral oil present in the deposit can be extracted by means of primary and secondary production.

It is known that the mineral oil yield can be further increased by tertiary oil production measures. Tertiary mineral oil production includes processes in which suitable chemicals are used as assistants for oil production. Water-in-oil macroemulsions have been proposed as a method for producing highly viscous drive fluids that can maintain effective mobility control while displacing moderately viscous oils. For example, the use of water-in-oil and oil-in-water macroemulsions have been evaluated as drive fluids to improve oil recovery of viscous oils. Such emulsions have been created by addition of sodium hydroxide to acidic crude oils. In particular, US 5,927,404 and US 6,068,054 describe oil-in-water and water-in-oil emulsions that are stabilized by solid particles. These emulsions can be used to displace oil in subterranean formations.

However, a more economic approach is to form an oil-in-water emulsion containing solid particles *in situ* in the subterranean oil-containing formation, recover the oil-in-water emulsion and separate off the different components so that the solid particles can be reused.

It is therefore an object of the present invention to provide a process for the preparation of a monolayer from at least one LDH with an improved space-time-yield.

It is a further object of the present invention to provide a process for recovering oil which is highly economic and easy to carry out.

### Summary

One of the objects of the present invention is solved by a process for the preparation of a monolayer of at least one layered double hydroxide (LDH) comprising the steps:
(A) provision of an aqueous solution comprising at least one metal salt;
(B) introduction of the solution of step (A) into a mixture, the mixture comprising
   a. at least one solvent I,
   b. at least one surfactant, and
   c. optionally at least one co-surfactant;
(C) introduction of at least one base;
(D) optionally mixing the resulting mixture to form an emulsion;
(E) hydrothermal treatment of the resulting emulsion;
(F) addition of at least one organic solvent;
(G) filtration of the resulting solution; and
(H) isolation of the monolayer of the at least one LDH.

The second object is solved a process for recovering oil from an oil-reservoir, the process comprising the steps of
(i) providing water and at least one LDH, wherein at least part of the LDH is present in form of a monolayer;
(ii) Contacting the mixture of step (i) with oil;
(iii) Optionally forming an emulsion;
(iv) Separating at least part of the oil from the emulsion.

The second object is also solved by the use of a monolayer from the at least one LDH in enhanced oil recovery.

### Detailed Description

In a first aspect, the present invention relates to a process for the preparation of a monolayer of at least one layered double hydroxide (LDH) comprising the steps:
(A) provision of an aqueous solution comprising at least one metal salt;
(B) introduction of the solution of step (A) into a mixture, the mixture comprising
   a. at least one solvent I,
   b. at least one surfactant, and
   c. optionally at least one co-surfactant;
(C) introduction of at least one base;
(D) optionally mixing the resulting mixture to form an emulsion;
(E) hydrothermal treatment of the resulting emulsion;
(F) addition of at least one organic solvent;
(G) filtration of the resulting solution; and
(H) isolation of the monolayer of the at least one LDH.

In a preferred embodiment, the LDH is an LDH of formula (I)

[M^{II}₍₁₋ₓ₎M^{III}ₓ(OH)₂]^{x+}[Aⁿ⁻]_{x/n} · y H₂O (I),

wherein
M^{II} denotes a divalent metal ion or 2 Li,
M^{III} denotes a trivalent metal ion,
Aⁿ⁻ denotes at least one n-valent anion, wherein
n is 1, 2, 3 or 4,
x is the mole fraction having a value ranging from 0.1 to 0.5 and
y is a value ranging from 0 to 5.0.

In a preferred embodiment, the anion Aⁿ⁻ is selected from the group consisting of alkyl sulfate, alkyl phosphate, alkyl sulfonate, alkyl phosphanate, alkyl phosphinate and alkyl carbonate, H⁻, F⁻, Cl⁻, Br⁻, I⁻, OH⁻, CN-, NO₃⁻, NO₂⁻, ClO⁻, ClO₂⁻, ClO₃⁻, ClO₄⁻, MnO₄⁻, CH₃COO⁻, HCO₃⁻, H₂PO₄⁻, HSO₄⁻, HS⁻, SCN-, [Al(OH)₄]⁻, [Al(OH)₄(H₂O)₂]⁻, [Ag(CN)₂]⁻, [Cr(OH)₄]⁻, [AuCl₄]⁻, O²⁻, S²⁻, O₂²⁻, SO₃²⁻, S₂O₃²⁻, CrO₄²⁻, Cr₂O₇²⁻, HPO₄²⁻, [Zn(OH)₄]²⁻, [Zn(CN)₄]²⁻, [CuCl₄]²⁻, PO₄³⁻, [Fe(CN)₆]³⁻, [Ag(S₂O₃)₂]³⁻, [Fe(CN)₆]⁴⁻, CO₃²⁻, SO₄²⁻, SeO₄²⁻, or any mixtures thereof.

In another preferred embodiment, M" is Mg or Ni.

In yet another preferred embodiment, M^{III} is selected from the group consisting of Al, Fe, Cr, Mn.

In one embodiment, the at least one LDH comprises hydrotalcite [Mg₆Al₂(CO₃)(OH)₁₆·4(H₂O)], manasseite [MgeAl₂(CO₃)(OH)₁₆·4(H₂O)], pyroaurite [MgeFe₂(CO₃)(OH)₁₆·4.5(H₂O)], sjoegrenite [MgeFe₂(CO₃)(OH)₁₆·4.5(H₂O)], stichtite [MgeCr₂(CO₃)(OH)₁₆·4(H₂O)], barbertonite [MgeCr₂(CO₃)(OH)₁₆·4(H₂O)], takovite, reevesite [Ni₆Fe₂(CO₃)(OH)₁₆·4(H₂O)], desautelsite [Mg₆Mn₂(CO₃)(OH)₁₆CO₃·4(H₂O)], motukoreaite, wermlandite, meixnerite, coalingite, chlormagaluminite, carrboydite, honessite, woodwardite, iowaite, hydrohonessite or mountkeithite. More preferably the at least one layered double hydroxide of general formula (I) is selected from the group consisting of hydrotalcite [Mg₆A₁₂(CO₃)(OH)₁₆·4(H₂O)], manasseite [Mg₆Al₂(CO₃)(OH)₁₆·4(H₂O)], pyroaurite [MgeFe₂(CO₃)(OH)₁₆·4.5(H₂O)], sjoegrenite [MgeFe₂(CO₃)(OH)₁₆·4.5(H₂O)], stichtite [MgeCr₂(CO₃)(OH)₁₆·4(H₂O)], barbertonite [MgeCr₂(CO₃)(OH)₁₆·4(H₂O)], takovite, reevesite [Ni₆Fe₂(CO₃)(OH)₁₆·4(H₂O)] and desautelsite [Mg₆Mn₂(CO₃)(OH)₁₆CO₃·4(H₂O)]. More preferably the at least one layered double hydroxide is selected from the group consisting of hydrotalcite [Mg₆Al₂(CO₃)(OH)₁₆·4(H₂O)], manasseite [MgeAl₂(CO₃)(OH)₁₆·4(H₂O)], pyroaurite [MgeFe₂(CO₃)(OH)₁₆·4.5(H₂O)] and sjoegrenite [Mg₆Fe₂(CO₃)(OH)₁₆·4.5(H₂O)].

### Step (A)

Step (A) of the process according to the present invention relates to the provision of an aqueous solution comprising at least one metal salt. The at least one metal salt may be any suitable metal salt. In a preferred embodiment, the metal salt comprises salts of Li, Ca, Mg, Fe, Ni, Zn, Co, Cu, Mn, Cr, Al, solvates thereof and/or mixtures thereof. In a more preferred embodiment, the metal salts comprises salts of Mg and/or Al.

In another preferred embodiment, the at least one metal salt comprises nitrate metal salts, preferably the nitrates of Li, Ca, Mg, Fe, Ni, Zn, Co, Cu, Mn, Cr, Al, solvates thereof and/or mixtures thereof.

In yet another preferred embodiment, the at least one metal salt is selected from the group consisting of of LiNO₃, Ca(NO₃)₂, Mg(NO₃)₂, Al(NO₃)₂, solvates thereof and/or any mixtures thereof. In a more preferred embodiment, the at least one metal salt comprises Mg(NO₃)₂ and/or Al(NO₃)₂.

In another preferred embodiment, the aqueous solution comprising at least one metal salt comprises from about 15 to about 48 % by weight of at least one metal salt and from about 85 to about 52 % by weight of water based on the total weight of the aqueous solution.

### Step (B)

Step (B) of the process of the invention relates to the introduction of the solution of step (A) into a mixture, the mixture comprising
a. at least one solvent I,
b. at least one surfactant, and
c. optionally at least one co-surfactant.

In one embodiment, the solvent I may be any suitable solvent comprising a hydrocarbon solvent, white mineral oil, plant oil, medium chain triglycerides, silicones, meltings of waxes and polymers, tetrahydrofuran, water, polar solvents such as glycerine, or combinations thereof. In a preferred embodiment, the solvent I comprises a hydrocarbon solvent. In an even more preferred embodiment, the solvent I comprises a hydrocarbon solvent selected from the group consisting of straight and branched chain hydrocarbons having from 5 to 40 carbon atoms such as pentane, hexane, heptanes, isooctane, dodecane, isododecane, squalane, cholesterol, hydrogenated polyisobutylene, isododecosane, hexadecane; C₁-C₃₀ alcohol esters of C₁-C₃₀ carboxylic acids and of C₁-C₃₀ dicarboxylic acids such as isononyl isononanoate, methyl isostearate, ethyl isostearate, diisoproyl sebacate, diisopropyl adipate, isopropyl myristate, isopropyl palmitate, methyl palmitate, myristyl propionate, 2-ethylhexyl palmitate, isodecyl neopentanoate, di(2-ethylhexyl) maleate, cetyl palmitate, cetyl stearate, methyl stearate, isopropyl stearate, and behenyl behenate; mono-, di-, and tri-glycerides of C₁-C₃₀ carboxylic acids such as caprylic/capric triglyceride, PEG-6 caprylic/capric triglyceride, and PEG-8 caprylic/capric triglyceride; alkylene glycol esters of C₁-C₃₀ carboxylic acids including ethylene glycol mono- and diesters of C₁-C₃₀ carboxylic acids and propylene glycol mono- and diesters of C₁-C₃₀ carboxylic acids such as ethylene glycol distearate; C₁-C₃₀ mono- and polyesters of sugars and related materials such as glucose tetraoleate; and organopolysiloxane oils such as polyalkyl siloxanes, cyclic polyalkyl siloxanes, polyalkylaryl siloxanes or combinations thereof.

In a preferred embodiment, the solvent I comprises pentanes, hexanes, heptanes, octanes, nonanes, decanes or any mixtures thereof.

In a more preferred embodiment, the solvent I is octane and preferably is isooctane.

However, the solvent I may also be oil, for example crude oil.

In a preferred embodiment, the amount of solvent I present in the mixture comprising the at least one solvent I, the at least one surfactant and optionally at least one co-surfactant and the solution of step (A) in the mixture is from about 50 % by weight to about 95 % by weight, preferably from about 70 % by weight to about 95 % by weight and more preferably from about 80 to about 95 % by weight, wherein the % weight is based on the total weight of the mixture comprising the solution of step (A), the at least one solvent I, the at least one surfactant and optionally at least one co-surfactant.

In a preferred embodiment, the at least one surfactant is an anionic surfactant. Examples of anionic surfactants include, but are not limited to, alkyl sulfonates, alkyl phosphates, alkyl carboxylates, EO-functionalized alkyl sulfonates, EO-functionalized alkyl sulfates or salts thereof. The respective cations to the anionic surfactants may be selected from alkali metals, alkaline earth metals and rare earth metals or mixtures thereof.

In a preferred embodiment, the at least one anionic surfactant may be dodecyl sulfate or a salt thereof and more preferably sodium dodecylsulfate (SDS).

In one embodiment, the resulting mixture of step (B) after the addition of the solution of at least one metal salt obtained in step (A) may be an emulsion, preferably a microemulsion and even more preferable a reverse microemulsion. In a preferred embodiment, the reverse microemulsion may contain water droplets surrounded by the surfactant and optionally the co-surfactant, wherein the water droplets may comprise the metal salts. The reverse microemulsion may, in one embodiment, be obtained by additional stirring or ultrasound.

In one embodiment, the amount of the at least one surfactant present in the mixture comprising the at least one solvent I, the at least one surfactant and optionally at least one co-surfactant and the solution of step (A) in the mixture is from about 1 to about 20 % by weight, preferably from about 2.5 to about 15 % by weight, more preferably from about 4 to about 10 % by weight and even more preferably from about 5 to about 10 % by weight, wherein the % weight is based on the total weight of the mixture comprising the solution of step (A), the at least one solvent I, the at least one surfactant and optionally at least one co-surfactant.

In a preferred embodiment, the optional co-surfactant is present in the mixture. In a more preferred embodiment, the co-surfactant is selected from the group consisting of n-alkyl alcohols (such as C₁-C₁₂-n-alkyl alcohols), anionic surfactants or non-ionic surfactants. In a more preferred embodiment, the co-surfactant is selected from the group consisting of isobutanol, n-butanol, n-amyl alcohol or mixtures thereof. In an even more preferred embodiment, the co-surfactant is n-butanol.

In a preferred embodiment, the amount of co-surfactant present in the mixture comprising the at least one solvent I, the at least one surfactant and at least one co-surfactant and the solution of step (A) in the mixture is from about 1.5 to about 20 % by weight, preferably from about 3 to about 15 % by weight, more preferably from about 5 to about 15 % by weight and even more preferably from about 6 to about 10 % by weight, wherein the % weight is based on the total weight of the mixture comprising the solution of step (A), the at least one solvent I, the at least one surfactant and at least one co-surfactant.

In a particularly preferred embodiment, the mixture in step (B) comprises SDS, n-butanol and isooctane, wherein the SDS may be the at least one surfactant, n-butanol may be the at least one co-surfactant and isooctane may be the solvent I.

In one preferred embodiment, the ratio of the at least one metal salt, the at least one surfactant and the solvent I in the mixture is from about 2:2:103.5 to about 20:20:103.5 and preferably from about 2:2:103.5 to about 12:12:103.5.

### Step (C)

Step (C) of the process according to the present invention relates to the introduction of at least one base to the mixture obtained after step (B). In a preferred embodiment, the at least one base may be selected from alkali hydroxides, alkaline earth metal hydroxides, aqueous ammonia solution, or mixtures thereof. In a more preferred embodiment, the base is selected from the group consisting of NaOH, KOH, Ca(OH)₂, LiOH, NH₃, or mixtures thereof. In an even more preferred embodiment, the base is NaOH.

In one embodiment, the base may be present together with at least one alkali metal salt or alkaline earth metal salt. In a preferred embodiment the base is introduced together with NaNO₃. The metal salts may react with the bases to form metal hydroxides. In one embodiment, the amount of base and/or alkali metal salt or alkaline earth metal salt is adjust to result in a pH of at least about 8, at least about 9 or at least about 10 of the mixture obtained after step (B) the base and optionally the alkali metal salt or alkaline earth metal salt.

In one embodiment, the base is added dropwise to the mixture obtained after step (C).

In a preferred embodiment, the base is added as a solution comprising from about 10 to about 20 % by weight base, from about 60 to about 90 % by weight water and optionally from about 10 to about 20 % by weight earth alkali or alkali salt, wherein the total sum of the % by weight is 100 %.

### Step (D)

In step (D) of the process according to the present invention, the mixture obtained after step (C) is optionally mixed to form an emulsion. The mixing may be performed by any means known to the skilled artisan. In a preferred embodiment, the mixing is performed using ultrasonic power. In a more preferred embodiment, the resulting emulsion is a reverse microemulsion.

In one embodiment, the mixture obtained after step (C) is already present as an emulsion, preferably as a microemulsion and even more preferably as a reverse microemulsion.

In another preferred embodiment, the droplets of the emulsion or the microemulsion have an average droplet size Dv50 in the range of from about 10 to about 200 nm as determined according to ISO13320: 2010-01.

### Step (E)

In step (E) of the process according to the present invention, the emulsion after step (D) is treated by a hydrothermal treatment. A hydrothermal treatment according to the presently claimed invention includes various techniques of crystallizing substances from high temperature aqueous solutions at high vapor pressures. This method is known to the person skilled in the art.

In a preferred embodiment, the hydrothermal treatment is carried out at a temperature in the range from about 20 °C to about 150 °C for a period of about 2 h to about 48 h, more preferably at a temperature in the range of from about 70 °C to about 90 °C for a period of from about 18 to about 26 h. In a particularly preferred embodiment, the hydrothermal treatment is carried out at a temperature of about 80 °C for about 24 h.

In another preferred embodiment, the pressure during step (E) may be in the range from about 0.4 to about 4.0 bar.

During the hydrothermal treatment, the monolayer of the at least one LDH may precipitate.

### Step (F)

In step (F) of the process according to the present invention, at least one organic solvent is added. The organic solvent may be a polar, aprotic organic solvent. In a preferred embodiment, the at least one organic solvent is selected from ketones, amides, nitriles, ethers, C₁-C₆ alcohols, mixtures thereof or aqueous mixtures thereof. In a preferred embodiment, the at least one organic solvent is selected from acetone, γ-butyrolactone, N-methyl-2-pyrrolidone, acetonitrile, dimethylformamide or mixtures thereof.

In a particularly preferred embodiment, the at least one organic solvent is acetone.

In another preferred embodiment, the at least one organic solvent is an aqueous alcohol solution, preferably an aqueous ethanol solution and more preferably a 50 % by weight aqueous ethanol solution.

### Step (G)

In step (G) of the process according to the present invention, the solution resulting after step (F) is filtered. In a preferred embodiment, the filtering may be performed using a Nutsche filter. The Nutsche filter may be used in connection with a water-jet-pump. In a preferred embodiment, a strainer is used having pores of a pore size of from about 5 to about 15 µm and preferably of from about 7 to 12 µm.

In one embodiment, the filtrate comprising the organic solvent may also comprise the solvent I of step (Ga).

The filtered solids comprising the monolayer of the at least one LDH obtained in step (G) may be washed once or several times with water and/or an organic solvent selected form the group consisting of ketones, amides, nitriles, ethers, C₁-C₆ alcohols, or mixtures thereof in a step (Ga). The washing may also be performed using a Nutsche filter.

In one embodiment, the monolayer of the at least one LDH is washed at least once with water. The washing with water may remove salts from the monolayer of the at least one LDH.

In a preferred embodiment, the monolayer of the at least one LDH is washed at least once with acetone and at least once with water.

In another preferred embodiment, the monolayer of the at least one LDH is washed twice with acetone and twice with water.

In yet another preferred embodiment, the monolayer of the at least one LDH is washed at least once with an aqueous solution of a C₁-C₆ alcohol, preferably with an aqueous solution of ethanol, and more preferably with a 50 % by weight aqueous solution of ethanol.

The filtration may lead to an improved space time yield (STY).

### Step (H)

Step (H) of the process according to the present invention is the isolation of the monolayer of the at least one LDH. The monolayer from the at least one LDH may be isolated from the filter used in step (G) and/or step (Ga).

In a preferred embodiment, the monolayer from the at least one LDH may be isolated as solid particles. It may be possible that the solids may be dried by method commonly known to the skilled person. In one embodiment, the solids are dried at about 60 °C e.g. for about 16 hours.

In a preferred embodiment, the isolated monolayer from the at least one LDH may comprise less than about 5 % by weight Na, preferably less than about 1 % by weight Na, more preferably less than about 0.5 % by weight Na, even more preferably less than about 0.1 % by weight Na, wherein the % weight are based on the total weight of the isolated monolayer of the at least one LDH. The amount of Na present in the isolated material may be determined by methods commonly known to the skilled person, e.g. by flame atomic absorption sprectrometry or inductively couple plasma optical emission spectrometry.

In another preferred embodiment, the isolated monolayer may comprise less than about 5 % by weight nitrogen, preferably less than about 2 % by weight nitrogen, more preferably less than about 1 % by weight nitrogen, even more preferably less than about 0.5 % by weight nitrogen, wherein the % weight are based on the total weight of the isolated monolayer of the at least one LDH. The amount of nitrogen in the isolated material may be determined by methods commonly known to the skilled person, e.g. by flame atomic absorption sprectrometry or inductively coupled plasma optical emission spectrometry.

In another preferred embodiment, the monolayer of the at least one LDH is isolated in the form of solid particles having a diameter from about ≥ 20 nm to about ≤ 5 µm as determined according to atomic force microscopy.

In yet another preferred embodiment, the space time yield of the process according to the present invention is more than about 3 kg/m³/day, preferably more than about 4 kg/m³/day and even more preferably more than about 5 kg/m³/day of monolayer of at least one LDH. In another preferred embodiment, the space time yield of the process according to the present invention is more than about 7 kg/m³/day, preferably more than about 11 kg/m³/day and even more preferably more than about 15 kg/m³/day and even more preferably more than about 19 kg/m³/day of monolayer of at least one LDH.

In one aspect, the present invention relates to a process for recovering oil from an oil-reservoir, the process comprising the steps of
(i) providing water and at least one LDH, wherein at least part of the LDH is present in form of a monolayer;
(ii) contacting the mixture of step (i) with oil;
(iii) optionally forming an emulsion; and
(iv) separating at least part of the oil from the emulsion.

### Step (i)

The monolayer of the at least one LDH may be any monolayer of an LDH obtained by any method. In a preferred embodiment, the monolayer of at least one LDH, in which form at least as a part of the provided LDH is present, may be obtainable according to a process according to the present invention comprising steps (A) to (H).

In a preferred embodiment, the water and the at least one LDH, wherein at least part of the LDH is present in form of a monolayer, are provided in form of a suspension.

In one preferred embodiment, the monolayer may be added in an amount of from about 0.01 to about 10 g in relation to 100 ml water, more preferably in amount of about 0.01 to about 5.0 g in relation to 100 ml water, even more preferably in an amount of about 0.1 to about 2.0 g in relation to 100 ml water and most preferably in an amount from about 0.5 g to about 1.5 g in relation to 100 ml water.

### Step (ii)

In step (ii) according to the present invention, the monolayer and the water are combined with an oil in the oil reservoir. Preferably, the monolayer and the water may be combined with the oil by a supply line. In the supply line the water and monolayer can be mixed. The supply line can be a (well)bore, a tube or a channel. Preferably, the monolayer and the water are pressed into the oil reservoir by a specified pressure. The specified pressure is a function of the permeability times the thickness of the reservoir layer divided by the viscosity of the injection fluid. The total pressure should not exceed the fracturing pressure of the rock matrix.

The term "(well)bore" refers to a hole in a formation made by drilling or insertion of a conduit into the formation. A wellbore may have a substantially circular cross section, or other cross-sectional shapes (e.g., circles, ovals, squares, rectangles, triangles, slits, or other regular or irregular shapes). As used herein, the terms "well" and "opening," when referring to an opening in the formation may be used interchangeably with the term "(well)bore."

In a preferred embodiment, the oil is crude oil.

In another embodiment, the oil comprises heavy oil.

### Step (iii)

In step (iii) according to the presently claimed invention, the oil and the mixture of step (i) are mixed to obtain an emulsion, wherein the emulsion comprises at least one monolayer, the water and the oil. For example, the mixing may be based on the pressure applied in step ii) causing a flow in the oil reservoir. In this region an emulsion may then be formed. The emulsion can be prepared by dispersing the water phase in the oil phase with the help of the monolayer. Emulsification is effected by a sufficient amount of mixing energy which results from the shear in the oil reservoir, for example an oil-containing formation. The oil-containing formation may be an oil-containing sandstone formation which may be a subterranean oil-containing formation. The subterranean oil containing formation may contain porous rocks. In other words, mixing may naturally accomplished by flow of the fluids through the porous rocks. The mixing may thus be effected by the flow of the fluids through the oil reservoir.

### Step (iv)

In step (iv), at least one part of the oil is separated from the emulsion. This may preferably occur after the emulsion has been transferred out of the oil reservoir. Such transfer out of the oil reservoir may be carried out by an outlet line. The outlet line can be a (well)bore, a tube or a channel. Preferably, the outlet line is different from the inlet line. The emulsion may be transferred to a surface facility, which is any facility configured to receive production fluids. The facility may be at or near the wellhead, or maybe downstream. The facility may be on land, on a floating platform or on a vessel.

In a preferred embodiment, the emulsion is transferred to a separator unit. In this separator unit the emulsion may be broken, for example by applying energy, chemical compounds, or a magnetic field. The separator unit may be connected to the outlet line. At least part of the oil is recovered in this step.

In one embodiment, the at least one LDH, wherein at least part of the LDH is present in form of a monolayer, and the water are also separated from the emulsion. In a preferred embodiment, the at least one LDH, wherein at least part of the LDH is present in form of a monolayer, and/or the water may be reused for enhanced oil recovery.

In one embodiment, in order to separate the oil and optionally the monolayer and optionally the water, the oil-in-water emulsion may be treated with chemicals. These chemicals are referred to as dehydration chemicals or demulsifiers. Demulsifiers allow the dispersed droplets of the emulsion to coalesce into larger droplets and settle out of the matrix. For example, US 5,045,212; US 4,686,066; and US 4,160,742 disclose examples of chemical demulsifiers used for breaking emulsions. In addition, commercially available chemical demulsifiers, such as ethoxylated-propoxylated phenolformaldehyde resins and ethoxylated-propoxylated alcohols, are known for demulsification of crude oils. Such demulsifiers further minimize the amount of heat and settling time otherwise required for separation. However, the effectiveness of these demulsifiers on oil such as heavy crude oils, particularly those containing asphaltenes, naphthenic acids and inorganic solids, may be limited.

In another embodiment, the oil is heavy oil and is separated by employing electrostatic separators.

In another preferred embodiment, gravity settling and centrifugation in conjunction with chemical demulsifiers may be used for the separation.

In another preferred embodiment, the temperature of operation of separators is increased, preferably in an attempt to break water/oil emulsions. For example, US 4,938,876 discloses a method for separating the oil, the water and the monolayer from emulsions by heating the emulsion to about 115 °C, rapidly cooling the mixture to below 100 °C, separating the monolayer from the liquids and then separating the water from the oil. The document further discloses the addition of a flocculant prior to cooling the mixture.

In some known technologies for breaking emulsions, an intermediate emulsion rag layer is produced. Further processing of the rag layer may be utilized to recover the oil and discharge the water. Recently, a microwave technology has been disclosed in US 6,086,830 and US 6,077,400. This microwave technology uses microwaves to treat hard-to-treat emulsions, especially for the rag layer.

It is one aspect of the present invention that a monolayer from the at least one LDH is used in enhanced oil recovery. The monolayer from the at least one LDH has been described above. In one embodiment, the monolayer from the at least one LDH may be obtainable from a process according to the present invention as described above. In another embodiment, the monolayer from the at least one LDH has been obtained by other means commonly known to the person skilled in the art.

Moreover, the LDH obtainable by the process according to the present application may also be used as an additive for polymers, as an additive for fire retardants, as a coating material, for the pickering stabilization of emulsions, in foams, in suspension polymerization, as photonic effect pigments, in photo-physics, in photochemistry, in catalysis, in nanocomposites or in drug release.

In a preferred embodiment, the monolayer from the at least one LDH is used in enhanced oil recovery as an emulsifier.

As used herein, the term "layered double hydroxide (LDH)" means clays consisting of stacks of positively charged mixed metal hydroxide layers with interlayer anions, mostly inorganic anions, to maintain overall charge neutrality.

For many applications single layers of LDH are required, which are also called "monolayer of LDH". As used herein, the term "monolayer" and "monolayer of at least one LDH" are used interchangably. Their generation typically requires an elaborate exfoliation of the stacks of LDHs into individual platelets. For example, one possible exfoliation method is the exchange of the inorganic anions by organic anions, e. g. surfactants so that an organically modified (monolayer) LDH is generated. The monolayer of at least one LDH may thus comprise a cationic positively charged mixed hydroxide layer and one anionic layer, e.g. comprising anionic surfactants.

As used herein, the term "n-valent" refers to the charge of the anion or cation. For example, the valence of CH₃COO⁻ is 1.

As used herein, the term "hydrocarbon solvent" refers to a solvent comprising unpolar organic solvents such as hydrocarbons or mixtures thereof. Examples of hydrocarbon solvents include, but are not limited to, pentanes, hexanes, heptanes, octanes, nonanes, decanes. Further, hydrocarbon solvents may also, in its broadest sense, include straight and branched chain hydrocarbons having from 5 to 40 carbon atoms such as pentanes, hexanes, heptanes, isooctane, dodecane, isododecane, squalane, cholesterol, hydrogenated polyisobutylene, isododecosane, hexadecane; C₁-C₃₀ alcohol esters of C₁-C₃₀ carboxylic acids and of C₁-C₃₀ dicarboxylic acids such as isononyl isononanoate, methyl isostearate, ethyl isostearate, diisoproyl sebacate, diisopropyl adipate, isopropyl myristate, isopropyl palmitate, methyl palmitate, myristyl propionate, 2-ethylhexyl palmitate, isodecyl neopentanoate, di(2-ethylhexyl) maleate, cetyl palmitate, cetyl stearate, methyl stearate, isopropyl stearate, and behenyl behenate; mono-, di-, and triglycerides of C₁-C₃₀ carboxylic acids such as caprylic/capric triglyceride, PEG-6 caprylic/capric triglyceride, and PEG-8 caprylic/capric triglyceride; alkylene glycol esters of C₁-C₃₀ carboxylic acids including ethylene glycol mono- and diesters of C₁-C₃₀ carboxylic acids and propylene glycol mono- and diesters of C₁-C₃₀ carboxylic acids such as ethylene glycol distearate; C₁-C₃₀ mono- and polyesters of sugars and related materials such as glucose tetraoleate; silicones and organopolysiloxane oils such as polyalkyl siloxanes, cyclic polyalkyl siloxanes, or polyalkylaryl siloxanes. The term "hydrocarbon solvent" may also include oil, such as crude oil, mineral oil, Benzene, Cycloheptane, Cyclohexane, Cyclohexene, Cyclooctane, Cyclopentane, Decalin, Diesel fuel, Dodecane, Durene,Heptane, Hexane, Kerosene, Limonene, Mesitylene, Methylcyclohexane, Naphtha, Octadecene, Pentamethylbenzene, Pentane, Petroleum ether, Toluene, Tetrahydrofurane, Tridecane,Turpentine, White spirit, Xylene, or plant oil.

As used herein, the term "oil" means a fluid containing a mixture of condensable hydrocarbons. It is preferred that the condensable hydrocarbons are present in an amount of more than 90 wt.-%, preferably in an amount of more than 99 wt.-%. Examples of oils include, but are not limited to, crude oil, straight and branched chain hydrocarbons having from 7 to 40 carbon atoms such as isooctane, dodecane, isododecane, squalane, cholesterol, hydrogenated polyisobutylene, isododecosane, hexadecane; C₁-C₃₀ alcohol esters of C₁-C₃₀ carboxylic acids and of C₁-C₃₀ dicarboxylic acids such as isononyl isononanoate, methyl isostearate, ethyl isostearate, diisoproyl sebacate, diisopropyl adipate, isopropyl myristate, isopropyl palmitate, methyl palmitate, myristyl propionate, 2-ethylhexyl palmitate, isodecyl neopentanoate, di(2-ethylhexyl) maleate, cetyl palmitate, cetyl stearate, methyl stearate, isopropyl stearate, and behenyl behenate; mono-, di-, and tri-glycerides of C₁-C₃₀ carboxylic acids such as caprylic/capric triglyceride, PEG-6 caprylic/capric triglyceride, and PEG-8 caprylic/capric triglyceride; alkylene glycol esters of C₁-C₃₀ carboxylic acids including ethylene glycol mono- and diesters of C₁-C₃₀ carboxylic acids and propylene glycol mono- and diesters of C₁-C₃₀ carboxylic acids such as ethylene glycol distearate; C₁-C₃₀ mono- and polyesters of sugars and related materials such as glucose tetraoleate; and organopolysiloxane oils such as polyalkyl siloxanes, cyclic polyalkyl siloxanes, and polyalkylaryl siloxanes. It is also contemplated to use propoxylated or ethoxylated forms of the above-exemplified oils.

In the context of oil recovery, the term "oil" refers to oils present in an oil reservoir that may be recovered.

As used herein, the term "crude oils" means a mixture of hydrocarbons that existed in liquid phase in underground reservoirs and remains liquid at atmospheric pressure after passing through surface separating facilities and which has not been processed through a crude oil distillation tower.

Most preferably the oil is crude oil having an API gravity in the range between 20 °API and 40 °API. Such oils, by nature of their composition, usually contain asphaltenes and polar hydrocarbons. API gravity is defined as following formula by the American Petroleum Institute (API): API gravity = (141.5/Specific Gravity) - 131.5, where specific gravity is a ratio of the density of oil to the density of a reference substance, usually water, and is always determined at 60 degrees Fahrenheit.

As used herein, the term "surfactant" means a compound that lowers the surface tension or interfacial tension between two liquids or between a liquid and a solid. Surfactants are usually organic compounds that are amphiphilic, meaning they contain both hydrophobic groups (their tails) and hydrophilic groups (their heads). Therefore, a surfactant contains both a water insoluble (or oil soluble) component and a water soluble component. Surfactants will diffuse in water and adsorb at interfaces between air and water or at the interface between oil and water, in the case where water is mixed with oil. The water-insoluble hydrophobic group may extend out of the bulk water phase, into the air or into the oil phase, while the water-soluble head group remains in the water phase. The term "surfactant" includes any kind of surfactant, including cationic, anionic, non-ionic or zwitterionic surfactants.

The term "anionic surfactant" means that when dissociated, the negatively charged anion may act as a surfactant. The anionic surfactants may comprise carboxylate, sulfonate, sulfate, or phosphate solubilizing groups.

Cationic, amphoteric or zwitterionic surfactants are also included by the term "surfactant" and may also or alternatively be used provided that they are compatible with the monolayer in the quantity required by the invention.

"Cationic surfactants" means that, when dissociated, the positively charged cation may act as a surfactant. Cationic surfactants may comprise primary, secondary, ternary or quaternary amines or other cationic groups. Suitable cationic surfactants may be, for example, lauryl pyridinium chloride, octylbenzyltrimethyl-ammonium chloride, dodecyl trimethylammonium chloride and ethylene oxide condensates of primary fatty acid amines.

"Non-ionic surfactants" may be characterized in that they do not dissociate. Non-ionic surfactants are interfacially active substances having a head group, which is an uncharged, polar, hydrophilic group, not carrying a ionic charge at neutral pH, and which head group makes the non-ionic surfactant water soluble. Such a surfactant adsorbs at interfaces and aggregates to micelles above the critical micelle concentration (cmc). Nonionic surfactants may comprise amide or hydroxyl groups or ethylene oxide chains. According to the type of the hydrophilic head group they may be distinguished between (oligo)oxyalkylene-groups, especially (oligo)oxyethylene-groups, (polyethylene-glycol-groups), including fatty alcohol polyglycole ether (fatty alcohol alkoxylates), alkylphenol polyglycolether and fatty acid ethoxylates, alkoxylated triglycerides and mixed ethers (polyethylene glycolether alcoxylated on both sides); and carbohydrate-groups, including e.g. alkyl polyglucosides and fatty acid-N-methylglucamides. Other examples of non-ionic surfactants are fatty alcohols, such as C₈-C₁₈ fatty alcohols.

Non-limiting examples of surfactants are C₈ to C₁₈ fatty acids or their water soluble salts; water soluble sulfates of C₈ to C₁₈ alcohols; sulfonated alkylaryl compounds such as, for example, dodecylbenzene sulfonate, alkylphenoxy polyethoxy ethanols, such as, for example with C₇ to C₁₈ alkyl groups and 9 to 40 or more oxyethylene units ("EO-functionalized") ; ethylene oxide ("EO-functionalized") derivatives of long chain carboxylic acids, such as, for example of lauric, myristic, palmitic or oleic acids; ethylene oxide derivatives of long chain alcohols, such as, for example of lauryl or cetyl alcohols; and alkanolamides and polyglucosides, such as, for example the alkyl polyglucosides.

As used herein, the term "co-surfactant" means a compound that may act in addition to another surfactant by (further) reducing the surface tension of a liquid. Examples of co-surfactants include, but are not limited to, n-alkyl alcohols (e.g. C₁-C₁₂ alkyl alcohols), surfactants such as anionic surfactants, cationic surfactants or non-ionic surfactants.

As used herein, the term "emulsion" means a mixture of two or more liquids that are normally immiscible, i.e. nonmixable or unblendable. The matrix of an emulsion is called the external or continuous phase, while the portion of the emulsion that is in the form of droplets is called the internal, dispersed or discontinuous phase. An (micro)emulsion according to the presently claimed invention may also be denoted as a fluid colloidal system in which liquid droplets and/or liquid crystals are dispersed in a liquid. The droplets often exceed the usual limits for colloids in size. An emulsion may be denoted by the symbol O/W (or o/w), if the continuous phase is an aqueous solution, and by W/O or (w/o), if the continuous phase is an organic liquid (an "oil"). More complicated emulsions such as O/W/O (i. e. oil droplets contained within aqueous droplets dispersed in the continuous oil phase) are also possible.

The term "microemulsion" refers to clear, thermodynamically stable, isotropic liquid mixtures of oil, water and surfactant, frequently in combination with a cosurfactant. The droplet sizes of droplets contained in a microemulsion are typically in the range from about 10 to about 200 nm. The three basic types of microemulsions are direct (oil dispersed in water, o/w), reversed (water dispersed in oil, w/o) and bicontinuous microemulsions (dispersed phase contains interconnected domains of water and oil). The structure of a (micro)emulsion depends on its composition. If the oil content is low, discrete oil droplets are dispersed in the water phase. Thus, an oil-in-water emulsion exists. The surfactant molecules form a monolayer at the interface between the oil and the water, with the hydrophobic tails of the surfactant molecules dissolved in the oil phase and the hydrophilic head groups in the aqueous phase. In the case of a water-in-oil (micro)emulsion, the oil is the continuous phase. Inverse micelles are generated. The type of an emulsion may be determined by methods commonly known to the skilled person, e.g. by measuring the conductivity of the emulsion.

Microemulsions according to the presently claimed invention may be generated by simple mixing of the components that does not require the high shear conditions generally used in the generation of conventional emulsions. Microemulsions may form spontaneously if the conditions are right because their endeavor is to achieve a very low interfacial tension between the oil phase and the water phase. Small droplets of the dispersed phase are formed in the continuous phase. The droplets of a microemulsion may act as nano-reactors with defined reaction conditions. The droplet size confines the size of the generated particle.

As used herein, an "emulsifier" is a surfactant that stabilizes emulsions by lowering the rate of aggregation and/or coalescence of the emulsions. emulsifiers may also be solids that stabilize an emulsion. Surface-active substances are located primarily in the interface between the oil and water phase to lower the interfacial tension. In this context, the term "stability" or "stabilized" for an emulsion refers to the period up to incipient separation, and in which the emulsion may not visually show segregation, such as the formation of a visible bottom layer of water and/or a visible top layer of oil. For evaluating the stability, as used in this invention, a test method may for example be used, wherein a sample of 100 g of emulsion is stored in a test tube with an inner diameter of 2.5 cm and sufficient length. The tube is stored at a selected temperature and monitored over time for separation to occur, i.e. for formation of a top or bottom layer. The stability is then the time elapsing between filling the test tube and the observation of the separation phenomenon. The temperature is to be chosen such that it is above the melting temperature of the compound in the emulsions with the highest melting temperature, and below the boiling temperature of the lowest boiling compound of the emulsion. Typically, the temperature is from about 30 °C to about 300 °C.

As used herein, the term "alkyl" preferably denotes a linear or branched, substituted or unsubstituted C₁-C₂₀-alkyl, more preferably C₈-C₁₈-alkyl chain. In particular, an alkyl is a linear, unsubstituted C₁₄-C₁₈-alkyl, more particularly a linear, unsubstituted C₁₆-alkyl.

The term "solid" means a substance in its most highly concentrated form, i.e., the atoms or molecules comprising the substance are more closely packed with one another relative to the liquid or gaseous states of the substance.

The "particle" of the presently claimed invention may have any shape, for example a spherical, cylindrical, a circular or cuboidal shape.

Preferably, in the inventively claimed process for the preparation of the at least one monolayer from the at least one layered double hydroxide (LDH), the solid particles have a diameter from ≥ 20 nm to ≤ 5 µm determined according to atomic force microscopy (AFM). More preferably, the solid particles have a diameter from ≥ 50 nm to ≤ 2 µm and even more preferably the solid particles have a diameter from ≥ 100 nm to ≤ 1 µm.

As used herein, the term "metal salt" refers to any compound that may be distinguished by having a cationic part and an anionic part. It may not be necessary for a metal salt that the cationic part and the anionic part may actually dissociate. The cationic part of the metal salt is a metal, preferably a metal selected from the group consisting of Li, Ca, Mg, Fe, Ni, Zn, Co, Cu, Mn, Cr or Al. However, the anionic part of the metal salt may comprise non-metal anions such as H-, F-, Cl⁻, Br⁻, I⁻, OH⁻, CN⁻, NO₃⁻, NO₂⁻, ClO⁻, ClO₂⁻, ClO₃⁻, ClO₄⁻, CH₃COO⁻, HCO₃⁻, H₂PO₄⁻, HSO₄⁻, HS-, SCN-, O²⁻, S²⁻, O₂²⁻, SO₃²⁻, S₂O₃²⁻, HPO₄²⁻, PO₄³⁻, CO₃²⁻, SO₄²⁻, SeO₄²⁻, PO₄³⁻, alkyl sulfate, alkyl phosphate, alkyl sulfonate, alkyl phosphanate, alkyl phosphinate and alkyl carbonate but it may also comprise metals or half-metals such as in anionic complexes such as [Al(OH)₄]⁻, [Al(OH)₄(H₂O)₂]⁻, [Ag(CN)₂]⁻, [Cr(OH)₄]⁻, [AuCl₄]⁻, [Zn(OH)₄]²⁻, [Zn(CN)₄]²⁻, [CuCl₄]²⁻, [Fe(CN)₆]³⁻, [Ag(S₂O₃)₂]³⁻, [Fe(CN)₆]⁴⁻; SeO₄²⁻, CrO₄²⁻ or Cr₂O₇²⁻. The term "metal salt" may also include the solvates, such as hydrates, of metal salts.

As used herein, the term "salt" refers to ionic compounds that result from the neutralization reaction of an acid and a base. They are composed of related numbers of cations and anions so that the product is electrically neutral and may dissociate in solution. Examples of salts include earth alkali salts or alkali salts, including NaCl and NaNO₃; and metal salts.

The preferred embodiments of practicing the invention have been described. It should be understood that the foregoing is illustrative only and that other means and techniques can be employed without departing from the true scope of the presently claimed invention claimed herein.

### Examples

### Example 1. Methods

### Example 1.1 Emulsion characterization and monolayer characterization

### Example 1.1.1 Type

The type of emulsion according to the presently claimed invention (oil-in-water-type or water-in-oil-type) was determined by conductivity measurement.

For example, electric conductivity can be used to reveal the present of continuous aqueous areas because the electric conductivity is mainly due to water domains. Oil shows a very low electrical conductivity. Thus, oil-in-water microemulsions and bicontinuous microemulsions exhibit an electronic conductivity, whereas water-in-oil microemulsions show a very poor electric conductivity. The electric conductivity depends on temperature, concentration and the present of ions.

After 24 hours from making an emulsion, the conductivity of emulsion was measured with a conductivity meter (LF330, Wissenschaftlich-Technische Werkstätten GmbH). When conductivity of an emulsion is more than 10 µS / cm, it indicates that the emulsion is oil in water type. When conductivity of an emulsion is less than 10 µS / cm, it indicates that the emulsion is water in oil type.

### Example 1.1.2 Droplet Size

Droplet size of emulsion was measured by the laser diffraction in accordance to ISO13320: 2010-01. The value of Dv₅₀ was used for comparison.

N₂ adsorption desorption isotherms: Langmuir surface areas, BET surface areas, micropore volume, pore volume, micropore size were measured via nitrogen adsorption at 77 K according to DIN 66131: 1993-6 (BET) and DIN 66135-1: 2001-06 (N₂ adsorption). The micropore volume was determined from the t-plot analysis.

X-ray powder diffraction: The determinations of the crystallinities were performed on a D8 Advance series 2 diffractometer from Bruker AXS. The diffractometer was configured with an opening of the divergence aperture of 0.1 ° and a Lynxeye detector. The samples were measured in the range from 2 ° to 70 ° (2 Theta). After baseline 30 correction, the reflecting surfaces were determined by making use of the evaluation software EVA (from Bruker AXS). The ratios of the reflecting surfaces are given as percentage values.

### Exampe 1.1.3 SEM

Powder samples were investigated with the field emission scanning electron microscope (FESEM) Hitachi S-4700, which was typically run at acceleration voltages between 2kV and 20kV. Powder samples were prepared on a standard SEM stub and sputter coated with a thin platinum layer, typically 5nm. The sputter coater was the Polaron SC7640. The sizes of LDH particles, diameter and thickness, were counted manually from SEM images. 50 particles were picked up randomly, and their sizes were measured. The averages were defined by the particle sizes. Aspect ratio was determined as the ratio of diameter/thickness.

### Example 1.1.3 Elemental Analysis

Composition of the obtained materials is measured with flame atomic absorption spectrometry (F-AAS) and inductively coupled plasma optical emission spectrometry (ICP-OES).

### Example 1.1.4 AFM

The heights of the particles are measured with atomic force microscopy (AFM). The AFM measurement was performed on Bruker ICON Peak Force Mapping at 1 nN. Bruker MPP-12120-10 Model TAP150A was used as a cantilever. Scan frequency was 0.3Hz. Typically, 5mg of powder was dispersed in 8ml of EtOH (dry, Aldrich) with 10 minutes of ultrasonic sound. Then the suspension was dropped onto a freshly cleaved Mica surface and dried under vacuum at room temperature.

### Example 1.1.5 FT-IR analysis

The functional groups of samples are observed with FT-IR. The FT-IR measurements were performed on a Nicolet 6700 spectrometer with KBr method. Typically, 1 mg of sample and 300 mg of KBr were mixed and grinded in agate mortar, and the mixture was press with 80 kN. The spectra were recorded in the range of 4000 cm⁻¹ to 400 cm⁻¹ at a resolution of 2 cm⁻¹. The obtained spectra were represented by a plot having on the x axis the wavenumber (cm⁻¹) and on the y axis the absorbance (arbitrary units).

### Example 2 Preparation of the monolayer from the at least one LDH

### Example 2.1 General method

An aqueous solution of magnesium nitrate and aluminum nitrate (solution A) is introduced into the oil phase consisting of isooctane with sodium dodecyl sulfate (SDS) as surfactant and n-butanol as co-surfactant. Furthermore aqueous solutions of sodium hydroxide and sodium nitrate are added (solution C+B). Sodium hydroxide acts as a base and reacts with the metal nitrates to metal hydroxides. The solution C may be added to adjust the pH-value (to at least 10).

Adding the aqueous solution A to the oil phase with the surfactant and the co-surfactant the water droplets are surrounded by the SDS and the n-butanol. Thus, a reverse microemulsion of water droplets containing the metal salts in the isooctane is generated (optionally with the help of stirring or ultrasound). By adding the aqueous solution B and C to this microemulsion the water droplets including the sodium nitrate are surrounded by the surfactant and the co-surfactant. After the combination of all components, mixing can be carried out. Therefore the microemulsion contains water droplets with corresponding reactants that get into contact via coalescence of the droplets.

The obtained solids were characterized by elemental analysis, FT-IR, XRD SEM and/or AFM as described above, indicating a monolayer of at least one LDH.

### Example 2.1.1 Preparation of emulsions

### Example 2.1.1.1 Experimental Materials

| | |
|---|---|
| Distilled water | 60.0 g |
| Magnesiumnitrat-6-hydrat (Fluka, MgN₂O₆ 6H₂O, ≥ 99.0% | 18.43 g |
| Aluminiumnitrat-9-hydrat (VWR international BVBA, AlN₃O₉ 9H₂O, 98.8% | 9.00 g |
| Isooctane (2,2,4-Trimethylpentan, Sigma-Aldrich, C₈H₁₈, anhydrous, 99.8% | 150 ml |
| Sodium dodecyl sulfate (Sigma, C₁₂H₂₅NaO₄S, ≥ 98.5% | 2.16 g |
| n-butanol (AppliChem GmbH, C₄H₁₀O, min 99.5%) | 2.28 g |
| Sodium nitrate (Aldrich, NNa₃O, 99,995%) | 6.97 g |
| Sodium hydroxide (Merck, NaOH, ≥ 99% (for 4M NaOH solution) | 4.8 g |
| Distilled water | 10 ml |
| Sodium hydroxide (Merck, NaOH, ≥ 99%) | 1.6 g |

### Example 2.1.1.2 preparation of comparative Example 1

18.43 g Mg(NO₃)₂ 6H₂O and 9.00 g Al(NO₃)₃ 9H₂O were dissolved in 30 ml deionized water to form Solution A, 6.97 g NaNO₃ and 4.8 g NaOH were dissolved in 30 ml deionized water to form Solution B. A 4 M NaOH solution (solution C) was prepared to adjust the pH value of the reaction system, 5.19 g of Solution A was added dropwise into 150ml isooctane containing 2.16 g sodium dodecyl sulfate and 2.28 g n-butanol to form a clear system. 3.75 g Solution B and 1.41 g NaOH solution were similarly dispersed to prepare a clear reverse microemulsion system, which was added dropwise into the former system afterwards. Then the mixture was put in an ultrasonic (US) bath (Bandelin Sonorex; Bandelin electronic) at 215/860 W with a frequency of 35kHz for 20 min. Then the mixture was heated in a stirred autoclave at 500 rpm with a volume of 200 ml at a temperature of 75°C for 24 hours. After the 24 hours, the autoclave was cooled and the gel-like solids were separated by centrifugation at 2700g and washed with acetone for 3 times and once with 1 I deionized water. The obtained precipitation was dried at 60°C under vacuum overnight. The obtained solids were analyzed by XRP and IR for identity of the monolayer of the at least one LDH.

### Yield

0.40 g (STY: 2.9 kg/m³/day)

### Example 2.1.1.3 preparation of comparative example 2

18.43 g Mg(NO₃)₂ 6H₂O and 9.00 g Al(NO₃)₃ 9H₂O were dissolved in 30 ml deionized water to form Solution A, 6.97 g NaNO₃ and 4.8 g NaOH were dissolved in 30 ml deionized water to form Solution B. A 4 M NaOH solution (solution C) was prepared to adjust the pH value of the reaction system, 1.73 g of Solution A was added dropwise into 50ml isooctane containing 0.72 g sodium dodecyl sulfate and 0.76 g n-butanol to form a clear system. 1.25 g Solution B and 0.47 g NaOH solution were similarly dispersed to prepare a clear reverse microemulsion system, which was added dropwise into the former system afterwards. Then the mixture was put in an ultrasonic sonotrode (Schöller-Schall) 80W, step 4, 5 for 30 minutes. Then the mixture was heated in a stirred autoclave at 500 rpm with a volume of 200 ml at a temperature of 75°C for 24 hours. After the 24 hours, the autoclave was cooled and the Gel-like solids were separated by centrifugation at 2700g and washed twice with acetone and once with deionized water. The obtained precipitation was dried at 60°C under vacuum overnight. The obtained solids were analyzed by XRP and IR for identity of the monolayer of the at least one LDH.

### Yield

STY: 2.74 kg/m³/day

### Example 2.1.1.4 preparation of inventive examples

The inventive examples were performed according to comparative example 2 but using different ratios of solution A, B, C, SDS and n-butanol, respectively; filtration of the Gel-like solids using a Nutsche filter instead of a centrifuge, a different washing step, or combinations thereof. The differences of the inventive examples 1 to 11 are shown below in Table 1, 2A and 2B.

**Table 1 Composition of samples**

| **Sample** | **Solution A [g]** | **Solution B [g]** | **Solution C [g]** | **Isooctane [ml]** | **SDS [g]** | **n-butanol [g]** |
|---|---|---|---|---|---|---|
| Comparative 1 | 5.19 | 3.75 | 1.41 | 150 | 2.16 | 2.28 |
| Comparative 2 | 1.73 | 1.25 | 0.47 | 50 | 0.72 | 0.76 |
| 1 | 10.38 | 7.5 | 2.82 | 150 | 4.32 | 4.56 |
| 2 | 15.57 | 11.25 | 4.23 | 150 | 6.48 | 6.84 |
| 3 | 20.76 | 15 | 5.64 | 150 | 8.64 | 9.12 |
| 4 | 20.76 | 15 | 5.64 | 150 | 8.64 | 9.12 |
| 5 | 20.76 | 15 | 5.64 | 150 | 8.64 | 9.12 |
| 6 | 20.76 | 15 | 5.64 | 150 | 8.64 | 9.12 |
| 7 | 20.76 | 20.64 | | 2x75 | 2x4.32 | 2x4.56 |
| 8 | 20.76 | 15 | 5.64 | 137.15 | 12.96 | 13.68 |
| 9 | 20.76 | 15 | 5.64 | 150 | 8.64 | 9.12 |
| 10 | 25.95 | 18.75 | 7.05 | 150 | 10.8 | 11.4 |
| 11 | 20.76 | 20.64 | | 2x75 | 2x4.32 | 2x4.56 |

The STY was improved by using a Nutsche filter instead of a centrifuge wherein the filter provides a pore size of 7 to 12 µm. The STY was also improved by a different ratio of solution A, B, C, SDS and n-butanol, respectively. The STY was also improved by using acetone in a first wash and a 1:1 mixture of water and Ethanol.

**Table 2A dispersion method, washing steps and STY of comparative 1, comparative 2 and samples 1 to 5**

| **sample** | **dispersing with** | **Separation device** | **Time [min] per washing step** | **Number of washing steps Acetone: Water** | | **Weight after drying [g]** | **time for centrifugation and washing [h]** | **STY [kg/m³/day]** | **STY compared to reference (comparative example 2)** |
|---|---|---|---|---|---|---|---|---|---|
| Comparative 1 | US bath | centrifuge 2700g [m/s²] | 30 | 3 | 1 | 4.0 | N.d. | 2.9 | 1.06 |
| Comparative 2 | US sonotrode: Step 4,5, 80 W, 30 min | centrifuge 2700g [m/s²] | 60 | 2 | 1 | 2.19 | 3 | 2.74 | 1 |
| 1 | US sonotrode: Step 4,5, 80 W, 30 min | centrifuge 2700g [m/s²] | 60 | 2 | 1 | 3.64 | 3 | 4.55 | 1.66 |
| 2 | US sonotrode: Step 4,5, 80 W, 30 min | centrifuge 3000g [m/s²] | 30 | 3 | 2 | 4.1 | 2.5 | 5.86 | 2.14 |
| 3 | US sonotrode: Step 4,5, 80 W, 30 min | centrifuge 3000g [m/s²] | 30 | 3 | 2 | 3.5 | 2.5 | 5.00 | 1.83 |
| 4 | US sonotrode: Step 4,5, 80 W, 30 min | nutsche filter | 3 | 3 | 2 | 4.2 | 0.25 | 16.80 | 6.14 |
| 5 | Ultra Turrax UT 25; step 6, 15 min | centrifuge 3000g [m/s²] | 30 | 3 | 2 | 3.36 | 2.5 | 4.80 | 1.75 |

In example sample 6 to 13, the solids were washed either once with water/EtOH or once with acetone and once with water /EtOH using a nutsche filter for the separation and using an Ultra Turrax UT or an US bath for the dispersion.

**Table 2B dispersion method, washing steps and STY of samples 6 to 11**

| **Sample** | **dispersing with** | **Separation device** | **wash media** | **time for separation and washing [h]** | **Weight after drying [g]** | **STY [kg/m³/day]** | **STY Compared to Comparative example 2** |
|---|---|---|---|---|---|---|---|
| 6 | Ultra Turrax UT 25; step 6,15 min | nutsche filter | water/ETOH (1:1) | 0.25 | 3.05 | 12.20 | 4.5 |
| 7 | US bath 20 min | nutsche filter | water/ETOH (1:1) | 0.25 | 2.92 | 11.68 | 4.3 |
| 8 | US bath 20 min | nutsche filter | water/ETOH (1:1) | 0.25 | 3.84 | 15.36 | 5.6 |
| 9 | US bath 20 min | nutsche filter | water/ETOH (1:1) | 0.25 | 2,01 | 8.04 | 2.9 |
| 10 | US bath 20 min | nutsche filter | Acetone; water/ETOH (1:1) | 0.33 | 5.2 | 19.50 | 7.1 |
| 11 | US bath 20 min | nutsche filter | Acetone; water/ETOH (1:1) | 0.33 | 2.88 | 10.80 | 3.9 |

### Example 3 Elemental analysis

The elemental analysis of the obtained solids of monolayer of at least one LDH were performed as described under example 1.3.

The results for the comparative examples "comparative 1" and "comparative 2" and the inventive examples 3 to 5 are shown below in Table 3. The low amounts of Na and N indicate a high purity of the obtained monolayers of LDH.

**Table 3 Elemental analysis**

| | **g/ 100 g** | | | | | |
|---|---|---|---|---|---|---|
| **Sample** | **C** | **S** | **N** | **Al** | **Mg** | **Na** |
| Comparative 1 | 27 | 5.6 | 0.5 | 4.9 | 11 | < 0,03 |
| Comparative 2 | 29.10 | 4.2 | 1.3 | 4.7 | < 0.03 | 0.78 |
| 3 | 23.1 | 5.1 | <0,5 | 5.2 | 13 | 0.45 |
| 4 | 29.3 | 5.8 | <0,5 | 4.6 | 10.8 | 0.23 |
| 5 | 25.5 | 5.4 | <0,5 | 5.4 | 12 | <0.01 |

### Example 4 Stability and permeability of emulsions

### Example 4.1 Sandpacked column experiments

Flow of emulsions through porous media, i.e. sandstone or packed sand, may be considered as an indicator of the suitability of an emulsifier in applications such as enhanced oil recovery. The following experiments may allow examining the permeability of emulsions.

A cylinder of 200 mm height and a diameter of 15 mm is used as a vessel. Sand provided by Wintershall (Well: Bockstedt-83) is put into the cylinder until a height of 100 mm is reached. The sand is not pretreated with water and/or oil. After that, 50 ml of emulsion is poured into the cylinder at a rate of 20 ml/min. The amounts of emulsion which have passed the sand (compared to the amount loaded onto the column) and the droplet size of the emulsion (as described in Example 1.1.2) are determined as a measure of the ability of the emulsion to flow through the packed column without destruction of the emulsion.

### Example 4.2 Emulsions used in sandpacked column experiments

The compositions of emulsions for the sandpacked column experiments may be as follows: 1g of monolayer of LDH, 10 ml of n-undecane (C₁₁H₂₄, Merck, min 99%, 1L=0,74kg, 1,579 mPa·s @20 °C) or 10 ml of mineral oil (PIONIER 1912, H&R Vertrieb GmbH, 31.4 mPa·s @20 °C), and 90 ml of salt water.

The present invention also relates to the following items:
(1) A process for the preparation of a monolayer of at least one layered double hydroxide (LDH) comprising the steps:
   (A) provision of an aqueous solution comprising at least one metal salt;
   (B) introduction of the solution of step (A) into a mixture, the mixture comprising
      a. at least one solvent I,
      b. at least one surfactant, and
      c. optionally at least one co-surfactant;
   (C) introduction of at least one base;
   (D) optionally mixing the resulting mixture to form an emulsion;
   (E) hydrothermal treatment of the resulting emulsion;
   (F) addition of at least one organic solvent;
   (G) filtration of the resulting solution; and
   (H) isolation of the monolayer of the at least one LDH.
(2) The process according to item (1), wherein the at least one LDH is a LDH of formula (I)

   [M^{II}₍₁₋ₓ₎M^{III}ₓ(OH)₂]^{x+}[Aⁿ⁻]_{x/n ·} y H₂O (I),

   wherein
   M^{II} denotes a divalent metal ion or 2 Li,
   M^{III} denotes a trivalent metal ion,
   Aⁿ⁻ denotes at least one n-valent anion, wherein
   n is 1, 2, 3 or 4,
   x is the mole fraction having a value ranging from 0.1 to 0.5 and
   y is a value ranging from 0 to 5.0.
(3) The process of item (2), wherein the anion is selected from the group consisting of alkyl sulfate, alkyl phosphate, alkyl sulfonate, alkyl phosphanate, alkyl phosphinate and alkyl carbonate, H⁻, F-, Cl⁻, Br, I⁻, OH⁻, CN⁻, NO₃⁻, NO₂⁻, ClO⁻, ClO₂⁻, ClO₃⁻, ClO₄⁻, MnO₄⁻, CH₃COO⁻, HCO₃⁻, H₂PO₄⁻, HSO₄⁻, HS⁻, SCN-, [Al(OH)₄]⁻, [Al(OH)₄(H₂O)₂]⁻, [Ag(CN)₂]⁻, [Cr(OH)₄]⁻, [AuCl₄]⁻, O²⁻, S²⁻, O₂²⁻, SO₃²⁻, S₂O₃²⁻, CrO₄²⁻, Cr₂O₇²⁻, HPO₄²⁻, [Zn(OH)₄]²⁻, [Zn(CN)₄]²⁻, [CuCl₄]²⁻, PO₄³⁻, [Fe(CN)₆]³⁻, [Ag(S₂O₃)₂]³⁻, [Fe(CN)₆]⁴⁻, CO₃²⁻, SO₄²⁻, SeO₄²⁻, or any mixtures thereof.
(4) The process of any one of items (1) to (3), wherein the at least one metal salt is selected from the group consisting of salts of Li, Ca, Mg, Fe, Ni, Zn, Co, Cu, Mn, Cr, Al, solvates thereof and/or mixtures thereof.
(5) The process of any one of items (1) to (4), wherein the at least one metal salt is selected from the group consisting of LiNO₃, Ca(NO₃)₂, Mg(NO₃)₂, Al(NO₃)₂, solvates thereof and/or any mixtures thereof.
(6) The process of any one of items (1) to (5), wherein the at least one solvent I is a hydrocarbon solvent, preferably a hydrocarbon solvent selected from the group consisting of pentanes, hexanes, heptanes, octanes, nonanes, decanes or any mixtures thereof and preferably is isooctane.
(7) The process of any one of items (1) to (6), wherein the at least one surfactant is a anionic surfactant and is preferably selected from the group consisting of alkyl sulfonates, alkyl phosphates, alkyl carboxylates, EO-functionalized alkyl sulfonates, EO-functionalized alkyl sulfates or salt thereof and more preferably is sodium dodecylsulphate (SDS).
(8) The process of any one of items (1) to (7), wherein the optionally at least one co-surfactant is selected from the group of n-alkyl alcohols, anionic surfactants or non-ionic surfactants and preferably is n-alkylalcohol and more preferably is n-butanol.
(9) The process of any one of items (1) to (8), wherein the at least one organic solvent is selected from the group consisting of ketones, ethers, C₁-C₆ alcohols, mixtures thereof or aqueous mixtures thereof and preferably is acetone.
(10) The process of any one of items (1) to (9), wherein the at least one base is selected from the group consisting of alkali hydroxides, alkaline earth metal hydroxides, aqueous ammonia solution, or mixtures thereof, and preferably is selected from the group consisting of NaOH, KOH; Ca(OH)₂, LiOH, NH₃, or mixtures thereof.
(11) The process of any one of items (1) to (9), wherein in step (C) at least one alkali metal salt or alkaline earth metal salt is added in addition to at least one base, wherein preferably the at least one alkali metal salt is NaNO₃.
(12) The process of any one of the items (1) to (11), wherein in step (G) the filteration is carried out using a Nutsche filter.
(13) The process of any one of items (1) to (12), wherein the mixture in step (B) comprises sodium dodecyl sulfate (SDS), n-butanol and isooctane.
(14) The process of any one of items (1) to (13), wherein the emulsion is a microemulsion and preferably is a reverse microemulsion.
(15) The process of any one of the items (1) to (14), wherein the droplets of the microemulsion have an average droplet size Dv50 in the range of from about 10 to about 200 nm determined according to ISO13320: 2010-01.
(16) The process according to any of the items (1) to (15), wherein the space time yield is more than about 3 kg/m³/day, preferably more than about 4 kg/m³/day and even more preferably more than about 5 kg/m³/day.
(17) The process according to any of the items (1) to (16), wherein the at least one mon-olayer from at least one LDH is present in the form of solid particles.
(18) The process according to item (17), wherein the solid particles have a diameter from about ≥ 20 nm to about ≤ 5 µm determined according to atomic force microscopy.
(19) The process according to any one of items (1) to (18), wherein step (G) is followed by step (Ga) wherein the monolayer of the at least one LDH is washed one or several times with water and/or an organic solvent selected from the group consisting of ketones, ethers, C₁-C₆ alcohols, or mixtures thereof.
(20) The process according to item (19), wherein in step (Ga) the monolayer of the at least one LDH is washed at least once with water.
(21) The process according to item (19), wherein in step (Ga) the monolayer of the at least one LDH is washed at least once with 50 % by weight aqueous ethanol.
(22) The process according to any one of items (1) to (21), wherein the isolated monolayer of the at least one LDH comprises less than about 5 % by weight Na, preferably less than about 1 % by weight Na, more preferably less than about 0.5 % by weight Na, even more preferably less than about 0.1 % by weight Na wherein the % weight are based on the total weight of the isolated monolayer of the at least one LDH.
(23) The process according to any one of items (1) to (22), wherein the isolated monolayer of the at least one LDH comprises less than about 5 % by weight nitrogen, preferably less than about 2 % by weight nitrogen, more preferably less than about 1 % by weight nitrogen, even more preferably less than about 0.5 % by weight nitrogen, wherein the % weight are based on the total weight of the isolated monolayer of the at least one LDH.
(24) The process according to any one of items (1) to (23), wherein the ratio of the at least one metal salt, the at least one surfactant and the solvent I is from about 2:2:103.5 to about 20:20:103.5 and preferably from about 2:2:103.5 to about 12:12:103.5.
(25) A process for recovering oil from an oil-reservoir, the process comprising the steps of
   (i) providing water and at least one LDH, wherein at least part of the LDH is present in form of a monolayer;
   (ii) contacting the mixture of step (i) with oil;
   (iii) optionally forming an emulsion; and
   (iv) separating at least part of the oil from the emulsion.
(26) The process of item (25), wherein the monolayer of at least one LDH is obtainable by a process according to any one of items (1) to (24).
(27) The process of any one of items (25) and (26), wherein the oil is crude oil.
(28) Use of a monolayer from the at least one LDH in enhanced oil recovery.
(29) The use of item (28), wherein the monolayer from the at least one LDH acts as an emulsifier for enhanced oil recovery.
(30) The use of any one of items (28) or (29), wherein the monolayer from the at least one LDH is obtainable according to the process of any one of items (1) to (24).

## Claims

1. A process for the preparation of a monolayer of at least one layered double hydroxide (LDH) comprising the steps:
(A) provision of an aqueous solution comprising at least one metal salt;
(B) introduction of the solution of step (A) into a mixture, the mixture comprising
a. at least one solvent I,
b. at least one surfactant, and
c. optionally at least one co-surfactant;
(C) introduction of at least one base;
(D) optionally mixing the resulting mixture to form an emulsion;
(E) hydrothermal treatment of the resulting emulsion;
(F) addition of at least one organic solvent;
(G) filtration of the resulting solution; and
(H) isolation of the monolayer of the at least one LDH.

2. The process according to claim 1, wherein the at least one LDH is a LDH of formula (I)
[M^{II}₍₁₋ₓ₎M^{III}ₓ(OH)₂]^{x+}[Aⁿ⁻]_{x/n ·} y H₂O (I),
wherein
M^{II} denotes a divalent metal ion or 2 Li,
M^{III} denotes a trivalent metal ion,
Aⁿ⁻ denotes at least one n-valent anion, wherein
n is 1, 2, 3 or 4,
x is the mole fraction having a value ranging from 0.1 to 0.5 and
y is a value ranging from 0 to 5.0,
and wherein preferably the anion is selected from the group consisting of alkyl sulfate, alkyl phosphate, alkyl sulfonate, alkyl phosphanate, alkyl phosphinate and alkyl carbonate, H-, F-, Cl⁻, Br, I⁻, OH⁻, CN⁻, NO₃⁻, NO₂⁻, ClO⁻, ClO₂⁻, ClO₃⁻, ClO₄⁻, MnO₄⁻, CH₃COO⁻, HCO₃⁻, H₂PO₄⁻, HSO₄⁻, HS⁻, SCN⁻, [Al(OH)₄]⁻, [Al(OH)₄(H₂O)₂]⁻, [Ag(CN)₂]⁻, [Cr(OH)₄]⁻, [AuCl₄]⁻, O²⁻, S²⁻, O₂²⁻, SO₃²⁻, S₂O₃²⁻, CrO₄²⁻, Cr₂O₇²⁻, HPO₄²⁻, [Zn(OH)₄]²⁻, [Zn(CN)₄]²⁻, [CuCl_{4]}²-, PO₄³⁻, [Fe(CN)₆]³⁻, [Ag(S₂O₃)₂]³⁻, [Fe(CN)₆]⁴⁻, CO₃²⁻, SO₄²⁻, SeO₄²⁻, or any mixtures thereof.

3. The process of claims 1 to 2, wherein the at least one metal salt is selected from the group consisting of salts of Li, Ca, Mg, Fe, Ni, Zn, Co, Cu, Mn, Cr, Al, solvates thereof and/or mixtures thereof,
and wherein preferably the at least one metal salt is selected from the group consisting of LiNO₃, Ca(NO₃)₂, Mg(NO₃)₂, Al(NO₃)₂, solvates thereof and/or any mixtures thereof.

4. The process of any one of claims 1 to 3, wherein
aa) the at least one solvent I is a hydrocarbon solvent, preferably a hydrocarbon solvent selected from the group consisting of pentanes, hexanes, heptanes, octanes, nonanes, decanes or any mixtures thereof and preferably is isooctane, and/or
bb) the at least one surfactant is an anionic surfactant and is preferably selected from the group consisting of alkyl sulfonates, alkyl phosphates, alkyl carboxylates, EO-functionalized alkyl sulfonates, EO-functionalized alkyl sulfates or salt thereof and more preferably is sodium dodecylsulphate (SDS), and/or
cc) the optionally at least one co-surfactant is selected from the group of n-alkyl alcohols, anionic surfactants or non-ionic surfactants and preferably is n-alkylalcohol and more preferably is n-butanol, and/or
dd) the at least one organic solvent is selected from the group consisting of ketones, ethers, C₁-C₆ alcohols, mixtures thereof or aqueous mixtures thereof and preferably is acetone, and/or
ee) the at least one base is selected from the group consisting of alkali hydroxides, alkaline earth metal hydroxides, aqueous ammonia solution, or mixtures thereof, and preferably is selected from the group consisting of NaOH, KOH, Ca(OH)₂, LiOH, NH₃, or mixtures thereof.

5. The process of any one of claims 1 to 4, wherein in step (C) at least one alkali metal salt or alkaline earth metal salt is added in addition to at least one base, wherein preferably the at least one alkali metal salt is NaNO₃.

6. The process of any one of the claims 1 to 5, wherein in step (G) the filteration is carried out using a Nutsche filter.

7. The process of any one of claims 1 to 6, wherein the mixture in step (B) comprises sodium dodecyl sulfate (SDS), n-butanol and isooctane.

8. The process of any one of claims 1 to 7, wherein the emulsion is a microemulsion and preferably is a reverse microemulsion, and
and wherein preferably the droplets of the microemulsion have an average droplet size Dv50 in the range of from about 10 to about 200 nm determined according to ISO13320: 2010-01.

9. The process according to any one of the claims 1 to 8, wherein the space time yield is more than about 3 kg/m³/day, preferably more than about 4 kg/m³/day and even more preferably more than about 5 kg/m³/day.

10. The process according to any one of the claims 1 to 9, wherein the at least one monolayer from at least one LDH is present in the form of solid particles, and
wherein preferably the solid particles have a diameter from about ≥ 20 nm to about ≤ 5 µm determined according to atomic force microscopy.

11. The process according to any one of claims 1 to 10, wherein step (G) is followed by step (Ga) wherein the monolayer of the at least one LDH is washed one or several times with water and/or an organic solvent selected from the group consisting of ketones, ethers, C₁-C₆ alcohols, or mixtures thereof, and
wherein preferably
aa) in step (Ga) the monolayer of the at least one LDH is washed at least once with water, or
bb) in step (Ga) the monolayer of the at least one LDH is washed at least once with 50 % by weight aqueous ethanol.

12. The process according to any one of claims 1 to 11, wherein
aa) the isolated monolayer of the at least one LDH comprises less than about 5 % by weight Na, preferably less than about 1 % by weight Na, more preferably less than about 0.5 % by weight Na, even more preferably less than about 0.1 % by weight Na wherein the % weight are based on the total weight of the isolated monolayer of the at least one LDH, and/or
bb) the isolated monolayer of the at least one LDH comprises less than about 5 % by weight nitrogen, preferably less than about 2 % by weight nitrogen, more preferably less than about 1 % by weight nitrogen, even more preferably less than about 0.5 % by weight nitrogen, wherein the % weight are based on the total weight of the isolated monolayer of the at least one LDH.

13. The process according to any one of claims 1 to 12, wherein the ratio of the at least one metal salt, the at least one surfactant and the solvent I is from about 2:2:103.5 to about 20:20:103.5 and preferably from about 2:2:103.5 to about 12:12:103.5.

14. A process for recovering oil from an oil-reservoir, the process comprising the steps of
(i) providing water and at least one LDH, wherein at least part of the LDH is present in form of a monolayer;
(ii) contacting the mixture of step (i) with oil;
(iii) optionally forming an emulsion; and
(iv) separating at least part of the oil from the emulsion.

15. The process of claim 14, wherein the monolayer of at least one LDH is obtainable by a process according to any one of claims 1 to 13, and/or
wherein the oil is crude oil.

16. Use of a monolayer from the at least one LDH in enhanced oil recovery.

17. The use of claim 16, wherein the monolayer from the at least one LDH acts as an emulsifier for enhanced oil recovery.

18. The use of any one of claims 16 or 17, wherein the monolayer from the at least one LDH is obtainable according to the process of any one of claims 1 to 13.
